# EUROPEAN PATENT APPLICATION

(11) **EP 4 826 899 A1**
(43) Date of publication of application: **21.10.2026**
(21) Application number: 26163683.1
(22) Date of filing: 10.03.2026
(51) Int. Cl.: H01M 50/566, H01M 50/213, H01M 50/503, H01M 50/505, H01M 50/507

(54) **BUSBAR ASSEMBLY AND BATTERY PACK INCLUDING THE SAME**

(30) Priority: 02.04.2025 KR 20250042859
(71) Applicant: SAMSUNG SDI CO., LTD., Yongin-si, Gyeonggi-do 17084 (KR)
(72) Inventor: KANG, Il Oh, 16678 Suwon-si (KR)
(74) Representative: Marks & Clerk LLP

(57) **Abstract**

A busbar assembly and a battery pack including the same are disclosed. A busbar assembly includes a first busbar electrically connecting a plurality of battery cells and a second busbar electrically connected to the first busbar and connected to a protection device, in which the second busbar includes a welding portion connected to the first busbar and a binding portion extending from the welding portion and connected to the protection device.

## Description

### BACKGROUND

### 1. Field

Aspects of embodiments of the present disclosure relate to a busbar assembly and a battery pack including the same.

### 2. Description of the Related Art

In general, with the recent rapid spread of electronic devices using batteries, such as mobile phones, laptop computers, electric vehicles, etc., the demand for high energy density and high capacity secondary batteries is rapidly increasing. Accordingly, research and development to improve the performance of lithium secondary batteries is being actively conducted.

A lithium secondary battery includes a positive electrode and a negative electrode that contain active materials capable of intercalation and deintercalation of lithium ions, and an electrolyte, and produces electrical energy through oxidation and reduction reactions when lithium ions are intercalated/deintercalated into/from the positive electrode and the negative electrode.

The above information disclosed in this Background section is provided to facilitate understanding of the background of the present disclosure and may contain information that does not constitute related (or prior) art.

### SUMMARY

According to an aspect of embodiments of the present disclosure, a busbar assembly capable of minimizing or reducing a weight and an internal volume of a battery pack, and a battery pack including the busbar assembly, are provided.

The above and other aspects and features of the present disclosure will be described in or will be apparent from the following description of some embodiments of the present disclosure.

According to one or more embodiments of the present disclosure, a busbar assembly includes a first busbar electrically connecting a plurality of battery cells, and a second busbar electrically connected to the first busbar and connected to a protection device, in which the second busbar includes a welding portion connected to the first busbar and a binding portion extending from the welding portion and connected to the protection device.

The first busbar may have a flat plate shape, and a height of the welding portion may be a height at which the welding portion contacts a bottom surface of the first busbar.

The binding portion may include a vertical portion extending from the welding portion in a direction opposite to a third direction, and a connection portion bent from the vertical portion, extending in a direction opposite to the first direction, and having a connection hole therein so as to be coupled to the protection device.

The second busbar may further include a bending portion extending in the direction opposite to the first direction and bent between the welding portion and the vertical portion such that a welding region of the welding portion expands while maintaining a gap between the vertical portion and a battery cell of the plurality of battery cells.

A front end of the welding portion may extend in the first direction beyond an inner surface of the vertical portion.

The bending portion may include a curve portion bent downward from a rear end of the welding portion and an inclined portion inclined downward from the curve portion to the vertical portion.

A rear end of the curve portion may be arranged inside the connection hole.

The bending portion may have a "C"-shaped cross-section.

The welding portion may include a fixing portion to provide assembly stability.

The busbar assembly may further include an insulation member between the battery cell and the vertical portion, and the fixing portion may include a fixing projection bent downward from the front end of the welding portion and a fixing groove formed in the insulation member to allow the fixing projection to be fitted therein.

The busbar assembly may further include an insulation member between the battery cell and the vertical portion, and the fixing portion may include a fixing piece arranged in the welding portion and having a fixing hole therein and a fixing member bound to the insulation member through the fixing hole.

The fixing piece may be located outside the welding portion and the welding region of the first busbar.

The welding portion may be located higher than a height of a battery cell of the plurality of battery cells, and the first busbar may include a contact portion contacting the welding portion and the vertical portion.

The contact portion may be bent from the first busbar and contact a plurality of surfaces of the second busbar.

The contact portion may be bent upward from the first busbar and may be bent in the first direction to contact a bottom surface of the welding portion and the vertical portion.

The welding portion may extend from the vertical portion in the direction opposite to the first direction, and the contact portion may be bent upward from the first busbar and may be bent in the direction opposite to the first direction to contact a top surface of the welding portion and the vertical portion.

According to one or more embodiments, or in another aspect of the present disclosure, a battery pack may be provided that include a housing, a plurality of battery cells accommodated in the housing, and a busbar assembly connecting the plurality of battery cells, in which the busbar assembly includes a first busbar electrically connecting a plurality of battery cells and a second busbar electrically connected to the first busbar and connected to a protection device, and the second busbar includes a welding portion connected to the first busbar and a binding portion extending from the welding portion and connected to the protection device.

The binding portion may include a vertical portion extending from the welding portion in a direction opposite to a third direction and a connection portion bent from the vertical portion, extending in a direction opposite to the first direction, and having a connection hole formed therein so as to be coupled to the protection device.

The second busbar may further include a bending portion extending in the direction opposite to the first direction and bent between the welding portion and the vertical portion such that a welding region of the welding portion expands while maintaining a gap between the vertical portion and a battery cell of the plurality of battery cells.

The welding portion may be located higher than a height of a battery cell of the plurality of battery cells, and the first busbar may include a contact portion contacting the welding portion and the vertical portion.

At least some of the above and other features of the invention are set out in the claims.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is an exploded perspective view schematically showing a structure of a battery pack according to an embodiment of the present disclosure;
FIG. 2 is a plan view schematically showing a structure of a battery pack according to an embodiment of the present disclosure;
FIG. 3 is a perspective view schematically showing a structure of an example battery cell ;
FIG. 4 is a cross-sectional view schematically showing a structure of an example battery cell;
FIG. 5 is a cross-sectional view schematically showing an upper portion of a structure of an example battery cell;
FIG. 6 is a perspective view schematically showing an installation state of a busbar assembly according to an embodiment of the present disclosure;
FIG. 7 is a cross-sectional view schematically showing an installation state of a busbar assembly according to an embodiment of the present disclosure;
FIG. 8 is a cross-sectional view schematically showing a shape of a second busbar for an embodiment of the present disclosure;
FIG. 9 is an enlarged view of a main portion showing connection of the busbar assembly according to an embodiment of the present disclosure;
FIG. 10 is a cross-sectional view schematically showing another example of a second busbar assembly according to an embodiment of the present disclosure;
FIG. 11 is a perspective view schematically showing an installation state of a busbar assembly according to another embodiment of the present disclosure;
FIG. 12 is a cross-sectional view schematically showing an installation state of the busbar assembly of FIG. 11;
FIG. 13 is an enlarged view schematically showing a main portion of fixing of the second busbar for an embodiment of the present disclosure;
FIG. 14 is a perspective view showing a modification of fixing of the second busbar for an embodiment of the present disclosure;
FIG. 15 is a cross-sectional view showing a modification of fixing of the second busbar for an embodiment of the present disclosure;
FIG. 16 is a cross-sectional view schematically showing an installation state of a busbar assembly according to another embodiment of the present disclosure; and
FIG. 17 is a cross-sectional view schematically showing another example of a busbar assembly according to an embodiment of the present disclosure.

### DETAILED DESCRIPTION

Although some specific structural or functional descriptions of some embodiments of the present invention disclosed in the present specification are presented by way of examples for the purpose of describing embodiments according to the present invention, embodiments according to the present invention may be implemented in various forms and are not to be construed as being limited to the embodiments described in the present specification.

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or more than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc., as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is arranged in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

In describing the present disclosure with respect to some example embodiments below, redundant descriptions of same or corresponding components across the plurality of embodiments may be omitted. For example, if a component that is the same as or corresponding to a component disclosed in one embodiment is disclosed in another embodiment, the corresponding component may be omitted from the description of the other embodiment, and a description may be provided mainly of components that have differences from those in the embodiment.

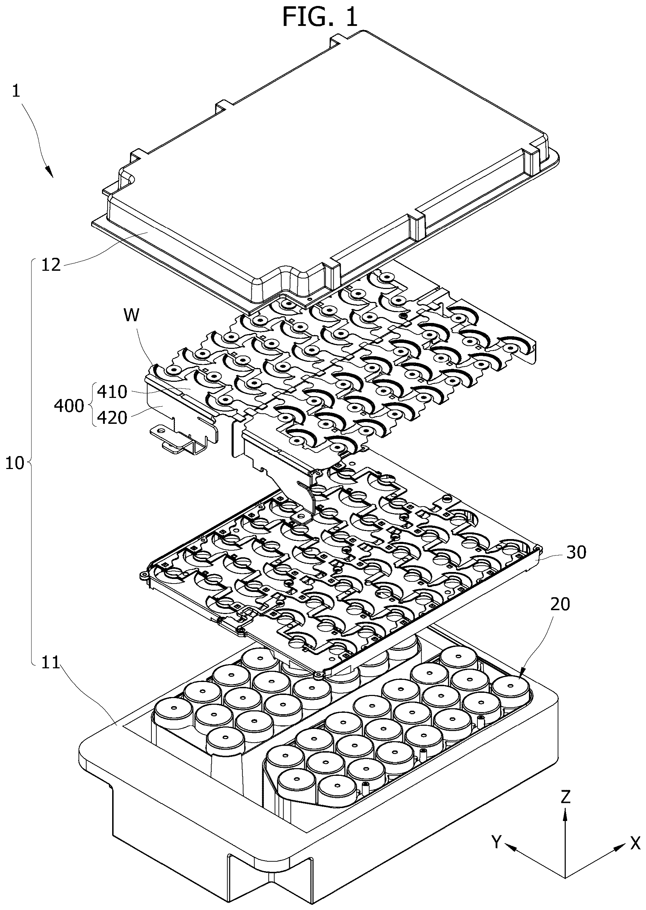

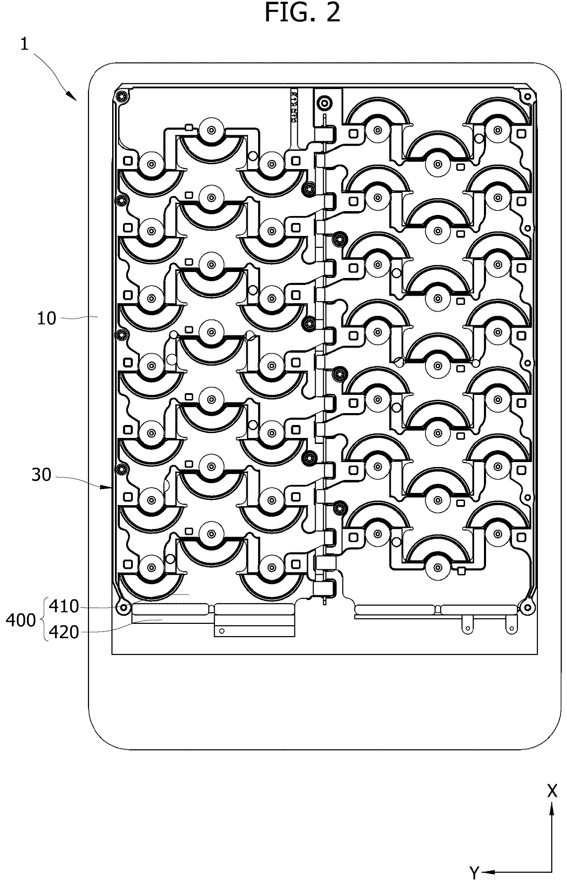

FIG. 1 is an exploded perspective view schematically showing a structure of a battery pack according to an embodiment of the present disclosure; and FIG. 2 is a plan view schematically showing the structure of the battery pack according to an embodiment of the present disclosure.

Referring to FIGS. 1 and 2, a battery pack 1 according to an embodiment may include a housing 10, a battery cell 20, a holder portion 30, and a busbar assembly 400.

The housing 10 may generally form an exterior of the battery pack 1 and may provide a space in which the battery cell 20 may be received or accommodated. According to an embodiment, a plurality of battery cells 20 may be received or accommodated in the housing 10.

The housing 10 according to an embodiment may include a housing body 11 and a housing cover 12.

The housing body 11 may have a form of a box having a hollow inner side and an open side. However, a cross-sectional shape of the housing body 11 is not limited to a quadrangular shape, as shown in FIG. 1, and may have any of various shapes, such as a polygon, a circle, an oval, etc.

Herein, a first direction described may be a lengthwise direction of the housing body 11, parallel to an X-axis based on FIG. 1, a second direction may be a width direction of the housing body 11, parallel to a Y-axis based on FIG. 1, and a third direction may be a height direction of the housing body 11, parallel to a Z-axis direction based on FIG. 1.

The housing cover 12 may be coupled to the housing body 11 and may close an inner space of the housing body 11. According to an embodiment, the housing cover 12 may have a generally plate shape and may be arranged to face an open side of the housing body 11. The housing cover 12 may be fixed to the housing body 11 by any of various types of coupling methods, such as any of bolting, welding, fitting, and the like.

The battery cell 20 may function as a unit structure for charging and discharging power in the battery pack 1. The battery cell 20 may be arranged or accommodated inside the housing 10. A central axis C of the battery cell 20 may be arranged parallel to a height direction of the housing 10, i.e., the Z-axis direction based on FIG. 1. According to an embodiment, a plurality of battery cells 20 may be arranged inside the housing 10.

One or more battery cells 20 may be provided. The following description will be made based on an example in which a plurality of cells 20 is provided.

The plurality of battery cells 20 may be arranged inside the housing 10 to form various pattems. For example, the plurality of battery cells 20 may be arranged in two or more rows in the length and width directions of the housing 10. The plurality of battery cells 20 may be arranged parallel to each other. However, an arrangement of the plurality of battery cells 20 is not limited to examples shown in FIGS. 1 and 2, and various arrangements may be provided.

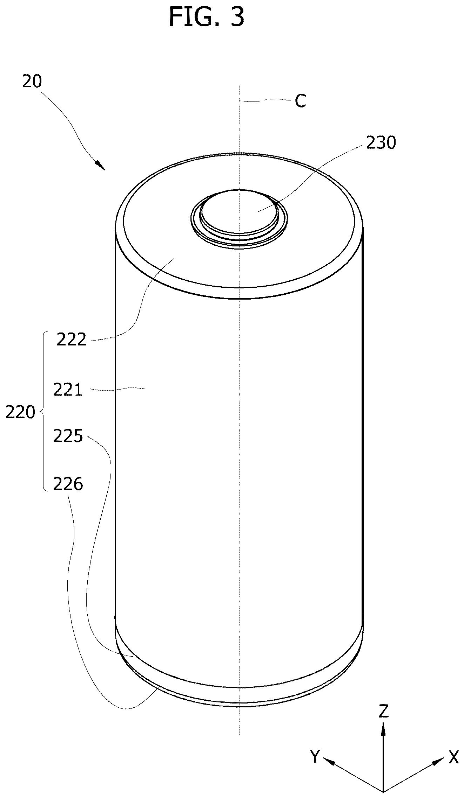

A description of the battery cell 20 will be provided later along with a description of FIGS. 3 to 5.

The holder portion 30 may function to fix the battery cell 20 received in the housing body 11 and to function as a structure where a first busbar 410, described later, is seated.

According to an embodiment, the holder portion 30 may be provided on the housing body 11.

The holder portion 30 may cover a top of the plurality of battery cells 20, and the busbar assembly 400 may be arranged on the holder portion 30.

The holder portion 30 may be provided in a generally hexahedral shape. However, a shape of the holder portion 30 is not limited to a hexahedron, and may be provided as any of various shapes.

In an embodiment, the housing body 11 may be formed with a concave groove, and the battery cells 20 may be inserted into the concave groove and arranged spaced apart from each other.

The holder portion 30 may be coupled to an upper portion of the housing body 11 to fix the battery cells 20.

The holder portion 30 may include a groove formed corresponding to the shape of the first busbar 410, and a hole formed to allow an electrical connection between a terminal 230 of the battery cell 20 and the first busbar 410.

In this manner, the battery cell 20 may be arranged in the housing body 11, and the holder portion 30 may be arranged on the battery cell 20, thereby enabling the plurality of battery cells 20 to be fixed to the holder portion 30.

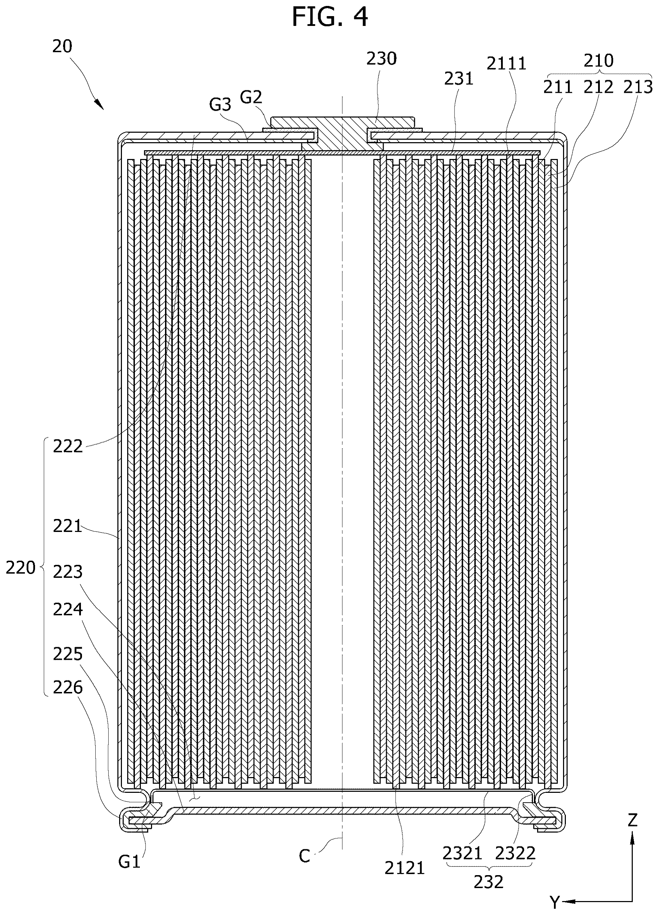

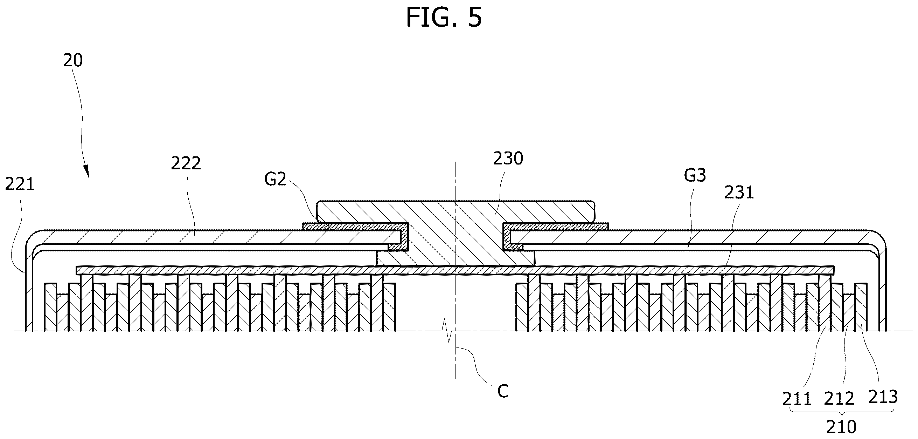

FIG. 3 is a perspective view schematically showing a structure of an example of a battery cell; FIG. 4 is a cross-sectional view schematically showing a structure of an example of a battery cell; and FIG. 5 is a cross-sectional view schematically showing an upper portion of a structure of an example of a battery cell.

Referring to FIGS. 3 through 5, the battery cell 20 according to an embodiment may include an electrode assembly 210, a case 220, and the terminal 230.

The following description will be made based on an example in which the battery cell 20 is a lithium-ion secondary battery that is a cylindrical battery. However, the present disclosure is not limited thereto, and the battery cell 20 may be a lithium polymer battery or a prismatic battery, for example.

The electrode assembly 210 may function as a unit structure that performs a charging/discharging operation of power in the battery cell 20.

The electrode assembly 210 may include a first electrode 211, a second electrode 212, and a separator 213 arranged between the first electrode 211 and the second electrode 212.

The electrode assembly 210 may have a wound shape centered around a winding axis.

The electrode assembly 210 may be wound clockwise or counterclockwise around the winding axis while the first electrode 211, the separator 213, and the second electrode 212 are stacked. Accordingly, the electrode assembly 210 may have a generally jelly roll shape. A cross-sectional shape of the electrode assembly 210 may have any of various shapes, such as an oval, a polygon, etc., as well as a circle. The winding axis of the electrode assembly 210 may be arranged on a same straight line as a central axis C of the battery cell 20.

In an embodiment, the first electrode 211 may function as a positive electrode of the electrode assembly 210. The first electrode 211 may have a shape of a foil including a metal material, such as aluminum or an aluminum alloy. A type, size, shape, etc., of the first electrode 211 may not be particularly limited as long as the first electrode 211 is conductive without causing a chemical change in the battery cell 20.

A first active material layer may be applied to at least a part of the first electrode 211. The first active material layer may be applied to opposite surfaces of the first electrode 211, or may be applied to one of the surfaces of the first electrode 211.

In an embodiment, the first electrode 211 functions as a positive electrode, and the first active material layer may include a positive-electrode active material.

The positive-electrode active material may be a compound capable of reversible intercalation and deintercalation of lithium (a lithiated intercalation compound). In an embodiment, one or more of compound oxides of lithium and a metal selected from cobalt, manganese, nickel, iron, and combinations thereof may be used.

For example, the positive-electrode active material may include at least one of a lithium-iron-phosphorus oxide (LiFePO₄, LFP), a lithium-manganese-iron-phosphorus oxide (LiMnFePO₄, LMFP), and a lithium-nickel-cobalt-manganese oxide (LiNiₓCo_{y}Mn_{z}O₂, LNCM). Here, conditions of 0 < x < 1, 0 < y <1 , 0 < z < 1, x + y + z = 1 may be satisfied. The positive-electrode active material may include any one of a lithium iron phosphorus oxide (LiFePO₄, LFP), a lithium manganese iron phosphorus oxide (LiMnFePO₄, LMFP), and a lithium nickel cobalt manganese oxide (LiNiₓCo_{y}Mn_{z}O₂, LNCM), or may include any two or all of the lithium iron phosphorus oxide (LiFePO₄, LFP), the lithium manganese iron phosphorus oxide (LiMnFePO₄, LMFP), and the lithium nickel cobalt manganese oxide (LiNiₓCo_{y}Mn_{z}O₂, LNCM).

The first active material layer may further include a positive-electrode conductive material.

The positive-electrode conductive material may provide conductivity to the first active material layer, and any suitable material that is electrically conductive without causing a chemical change may be used. Examples of the positive-electrode conductive material may include carbon-based materials, such as natural graphite, artificial graphite, carbon black, acetylene black, Ketjen black, carbon fibers, carbon nanofibers, carbon nanotubes, etc.; metal-based materials in the form of metal powder or metal fibers containing copper, nickel, aluminum, silver, etc.; conductive polymers, such as polyphenylene derivatives, etc.; or mixtures thereof.

The first active material layer may further include a positive-electrode binder.

The positive-electrode binder may attach particles of the positive-electrode active material well to each other and also attach the positive-electrode active material well to the first electrode 211.

Examples of the positive-electrode binders may include non-aqueous binders, aqueous binders, dry binders, or combinations thereof.

Examples of the non-aqueous binders may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenol resin, epoxy resin, polyvinyl alcohol, and combinations thereof.

If an aqueous binder is used as a positive-electrode binder, a cellulose-based compound capable of giving viscosity may be further included. For such a cellulose series compound, one or more of carboxymethyl cellulose, hydroxypropyl methyl cellulose, methyl cellulose, alkali metal salts thereof, etc., may be used in mixture. In an embodiment, Na, K or Li may be used as the alkali metal.

The dry binder may be a fiberizable polymeric material, such as polytetrafluoroethylene, polyvinylidene fluoride, a polyvinylidene fluoride-hexafluoropropylene copolymer, a polyethylene oxide, or a combination thereof.

The first electrode 211 may include a first uncoated portion 2111 on which the first active material layer is not coated. The first uncoated portion 2111 may protrude by a distance (e.g., a predetermined distance) from an end of the electrode assembly 210 along the winding axis.

The second electrode 212 may function as a negative electrode of the electrode assembly 210. The second electrode 212 may have a shape of a foil including a metal material, such as copper, a copper alloy, nickel, or a nickel alloy. The second electrode 212 may be arranged to face the first electrode 211 at a distance (e.g., a predetermined distance) from the first electrode 211.

A type, size, shape, etc., of the second electrode 212 is not particularly limited as long as the second electrode 212 is conductive without causing a chemical change in the battery cell 20.

A second active material layer may be applied to at least a part of the second electrode 212. The second active material layer may be applied to opposite surfaces of the second electrode 212, or may be applied to one of the surfaces of the second electrode 212.

In an embodiment, the second electrode 212 functions as a negative electrode, and the second active material layer may include a negative-electrode active material.

Examples of the negative-electrode active material may include a material capable of reversibly intercalating/deintercalating lithium ions, lithium metal, an alloy of lithium metal, a material capable of being doped and dedoped on lithium, or a transition metal oxide.

Examples of the material capable of reversibly intercalating/deintercalating lithium ions may include a carbon-based negative-electrode active material, such as crystalline carbon, amorphous carbon, or a combination thereof. Examples of the crystalline carbon may include graphite, such as natural graphite or artificial graphite in amorphous, plate-like, flake-like, spherical, or fibrous forms, and examples of the amorphous carbon may include soft carbon or hard carbon, mesophase pitch carbide, calcined coke, etc.

As an alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As a material that may be doped and dedoped on lithium, a Si-based negative-electrode active material or a Sn-based negative-electrode active material may be used. Examples of the Si-based negative-electrode active material may include silicon, a silicon-carbon composite, SiOₓ (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and combinations thereof), or a combination thereof. Examples of the Sn-based negative-electrode active material may be Sn, SnO2, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are assembled and an amorphous carbon coating layer (shell) positioned on the surface of the secondary particle. The amorphous carbon may also be located between silicon primary particles, such that, for example, the silicon primary particles may be coated with amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer positioned on the surface of the core.

An Si-based negative-electrode active material or an Sn-based negative-electrode active material may be used in mixture with a carbon-based negative-electrode active material.

The second active material layer may further include a negative-electrode binder.

The negative-electrode conductive material may provide conductivity to the second active material layer, and any suitable material that is electrically conductive without causing a chemical change may be used. Examples of the negative-electrode conductive material may include carbon-based materials, such as natural graphite, artificial graphite, carbon black, acetylene black, Ketjen black, carbon fibers, carbon nanofibers, carbon nanotubes, etc.; metal-based materials in the form of metal powder or metal fibers containing copper, nickel, aluminum, silver, etc.; conductive polymers, such as polyphenylene derivatives, etc.; or mixtures thereof.

The negative-electrode binder may attach particles of the negative-electrode active material well to each other and also attach the negative-electrode active material well to the second electrode 212.

Examples of the negative-electrode binders may include non-aqueous binders, aqueous binders, dry binders, or combinations thereof.

Examples of the non-aqueous binders may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenol resin, epoxy resin, polyvinyl alcohol, and combinations thereof.

If an aqueous binder is used as a negative-electrode binder, a cellulose-based compound capable of giving viscosity may be further included. For such a cellulose series compound, one or more of carboxymethyl cellulose, hydroxypropyl methyl cellulose, methyl cellulose, alkali metal salts thereof, etc., may be used in mixture. In an embodiment, Na, K or Li may be used as the alkali metal.

The dry binder may be a fiberizable polymeric material, such as polytetrafluoroethylene, polyvinylidene fluoride, a polyvinylidene fluoride-hexafluoropropylene copolymer, a polyethylene oxide, or a combination thereof.

The second electrode 212 may include a second uncoated portion 2121 on which the second active material layer is not coated. The second uncoated portion 2121 may protrude by a distance (e.g., a predetermined distance) from another end of the electrode assembly 210 located opposite to the first uncoated portion 2111 along the winding axis.

The separator 213 may be arranged between the first electrode 211 and the second electrode 212. The separator 213 may prevent or substantially prevent a short circuit between the first electrode 211 and the second electrode 212 while allowing movement of lithium ions between the first electrode 211 and the second electrode 212.

As the separator 213, polyethylene, polypropylene, polyvinylidene fluoride, or a multilayer of two or more thereof may be used, and a mixed multilayer, such as a two-layer separator of polyethylene/polypropylene, a three-layer separator of polyethylene/polypropylene/polyethylene, or a three-layer separator of polypropylene/polyethylene/polypropylene, may be used.

The separator 213 may include a porous substrate and a coating layer including an organic material, an inorganic material, or a combination thereof located on one or opposite surfaces of the porous substrate.

The porous substrate may be any polymer selected from among polyolefins, such as polyethylene, polypropylene, etc., polyesters, such as polyethylene terephthalate, polybutylene terephthalate, etc., polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth)acrylic-based polymer.

The inorganic material may include inorganic particles selected from, but not limited to, Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof.

The organic and inorganic materials may be in mixture in a single coating layer, or a coating layer containing the organic material and a coating layer containing the inorganic material may be stacked.

The separator 213 may be provided as a pair. A pair of separators 213 may be arranged to face opposite sides of the first electrode 211 or the second electrode 212, respectively. The pair of separators 213 may be wound around the winding axis together with the first electrode 211 and the second electrode 212.

The case 220 may form a general appearance of the battery cell 20 and receive the electrode assembly 210. In an embodiment, the case 220 may be provided to be electrically conductive. For example, the case 220 may include at least one material among steel, stainless steel, aluminum, and an aluminum alloy.

The case 220 may include a can 221 and a cap plate 224.

In an embodiment, the can 221 may have a cylindrical shape with a generally circular cross-section. A diameter of the can 221 may be greater than a diameter of the electrode assembly 210. A length of the can 221 parallel to the winding axis of the electrode assembly 210 may be greater than a length of the electrode assembly 210.

The electrode assembly 210 may be received or accommodated inside the can 221. A central axis of the can 221 may be arranged on a same straight line as the central axis C of the battery cell 20. The central axis of the can 221 may be arranged coaxially with the winding axis of the electrode assembly 210.

The can 221 may include a terminal plate 222 and an opening 223.

The terminal plate 222 and the opening 223 may be arranged at opposite ends of the can 221, respectively. The terminal plate 222 and the opening 223 may be arranged spaced apart from each other along the winding axis of the electrode assembly 210. In an embodiment, the terminal plate 222 may include iron (Fe).

The terminal plate 222 according to an embodiment may be formed to have a disk shape arranged at an end of the can 221. The terminal plate 222 may be oriented toward the housing cover 12 inside the housing body 11. In an embodiment, an outer circumferential surface of the terminal plate 222 may be integrally formed with an inner circumferential surface of the can 221, enabling sealing of an end of the can 221. In an embodiment, for example, the can 221 and the terminal plate 222 may be formed by a deep drawing process. In an embodiment, the terminal plate 222 may be manufactured separately from the can 221, and the outer circumferential surface thereof may be coupled to the inner circumferential surface of the can 221. A through hole may be formed in a central portion of the terminal plate 222 to allow insertion of the terminal 230 described later thereinto.

The opening 223 according to an embodiment may be formed in a shape of a hole penetrating another end of the can 221. The opening 223 may be oriented toward a bottom surface of the housing body 11 inside the housing body 11. Opposite sides of the opening 223 may be connected to an inner space of the can 221 and an outer space of the can 221, respectively. In a manufacturing process of the battery cell 20, the electrode assembly 210 may be inserted into the can 221 through the opening 223 along with the electrolyte.

The first uncoated portion 2111 of the electrode assembly 210 may be oriented toward the terminal plate 222 inside the can 221. The second uncoated portion 2121 of the electrode assembly 210 may be oriented toward the opening 223 inside the can 221.

A case gasket G3 may be arranged between the electrode assembly 210 and the terminal plate 222 to electrically insulate the electrode assembly 210 from the terminal plate 222. The case gasket G3 may electrically insulate the electrode assembly 210 from the terminal plate 222 by preventing or substantially preventing direct contact between the case 220 and the first electrode 211.

The case gasket G3 according to an embodiment may be arranged between a surface of the electrode assembly 210 from which the first uncoated portion 2111 protrudes and an inner surface of the terminal plate 222 oriented toward the inner space of the can 221. In an embodiment, the case gasket G3 may be fixed to the inner surface of the terminal plate 222 using an adhesive or the like, for example. The case gasket G3 may include an insulating material, such as rubber, polyethylene (PE), polypropylene (PP), polyethylene terephthalate (PET), etc.

The cap plate 224 may be configured to seal the opening 223 of the can 221.

The cap plate 224 according to an embodiment may be formed to have a generally disk shape. The cap plate 224 may be arranged in the opening 223 of the can 221. The inner surface of the cap plate 224 may be arranged to face another surface of the electrode assembly 210 from which the second uncoated portion 2121 protrudes in the opening 223. An outer surface of the cap plate 224 may be oriented toward the outer space of the can 221. The outer surface of the cap plate 224 may be oriented toward the bottom surface of the housing body 11 inside the housing body 11. In an embodiment, the cap plate 224 may be formed of a metallic material to provide mechanical rigidity, or, in another embodiment, may be formed of a synthetic resin material without electrical conductivity.

In an embodiment, a groove may be formed in the cap plate 224, and, if an event (e.g., fire) occurs in the battery cell 20 through the groove formed in the cap plate 224, the cap plate 224 may fracture. Therefore, as the groove is formed in the cap plate 224, the cap plate 224 may function as a vent.

The case 220 according to an embodiment may further include a beading portion 225 and a crimping portion 226.

The beading portion 225 may be a portion of the can 221 that protrudes toward the central axis of the can 221 from the inner circumferential surface of the can 221 in an entire area of the can 221. The beading portion 225 may be formed by pressing the outer circumference of the can 221 from a side adjacent to the opening 223. The beading portion 225 may contact another end of the electrode assembly 210 from which the second uncoated portion 2121 protrudes. Accordingly, the beading portion 225 may prevent or substantially prevent the electrode assembly 210 from moving in or moving outside the can 221. An edge of the inner surface of the cap plate 224 may be arranged to face another surface of the electrode assembly 210 from which the second uncoated portion 2121 protrudes with the beading portion 225 therebetween.

The crimping portion 226 may be arranged at an end of the can 221 where the opening 223 is formed. The crimping portion 226 may fix the cap plate 224 in the opening 223.

The crimping portion 226 according to an embodiment may be bent from an end of the can 221 that encloses the opening 223. The crimping portion 226 may be arranged to face the outer surface of the cap plate 224 oriented toward the outer space of the can 221.

A cap gasket G1 may be arranged between the cap plate 224 and the crimping portion 226 to electrically insulate the cap plate 224 from the case 220.

The cap gasket G1 according to an embodiment may be arranged to surround (e.g., fully surround) the end of the cap plate 224. The outer surface of the cap gasket G1 may be crimped and fixed to the inner surfaces of the beading portion 225 and the crimping portion 226. The cap gasket G1 may include an insulating material, such as rubber, polyethylene (PE), polypropylene (PP), polyethylene terephthalate (PET), etc. Thus, the cap gasket G1 may electrically insulate the cap plate 224 from the case 220, and prevent or substantially prevent moisture, foreign matter, and other substances from entering between the cap plate 224 and the case 220.

The crimping portion 226 may be arranged to face another surface of the cap plate 224 with the cap gasket G1 therebetween, and contact the cap gasket G1 to press the cap plate 224 toward the beading portion 225. Accordingly, the cap plate 224 may be stably fixed on a side of the opening 223 of the case 220.

The terminal 230 may be coupled to the terminal plate 222 and may protrude outwardly from the terminal plate 222. The terminal 230 may be formed of a metallic material having electrical conductivity, such as aluminum, nickel, copper, etc.

The terminal 230 according to an embodiment may penetrate the terminal plate 222 along the central axis C of the battery cell 20. A central axis of the terminal 230 may be arranged on a same straight line as the central axis C of the battery cell 20.

In an embodiment, the central portion of the terminal 230 may be inserted into the interior of the through hole formed in the terminal plate 222. The outer circumferential surface of the terminal 230 may be arranged at a distance (e.g., a predetermined distance) from the inner circumferential surface of the through hole formed in the central portion of the terminal plate 222.

Upper and lower ends of the terminal 230 may be arranged in the inner space and the outer space of the can 221, respectively. In an embodiment, opposite ends of the terminal 230 arranged in the inner space and the outer space of the can 221 may be compressed and deformed by riveting and may be arranged to face the outer surface and inner surface of the terminal plate 222, respectively. In an embodiment, an edge of the terminal 230 may have a cross-sectional shape that is generally U-shaped.

A terminal gasket G2 may be arranged between the terminal 230 and the case 220 to electrically insulate the terminal 230 from the case 220.

The terminal gasket G2 according to an embodiment may be arranged to surround (e.g., fully surround) the inner circumferential surface of the through hole formed in the terminal plate 222 as well as the outer and inner surfaces of the terminal plate 222 facing the opposite ends of the terminal 230. Opposite surfaces of the terminal gasket G2 may contact (e.g., closely contact) surfaces of the terminal plate 222 and the terminal 230. The terminal gasket G2 may include an insulating material, such as rubber, polyethylene (PE), polypropylene (PP), polyethylene terephthalate (PET), etc.

The terminal 230 may be electrically connected to the first electrode 211 of the electrode assembly 210. The terminal 230 may function as a first electrode terminal as the terminal 230 is electrically connected to the first electrode 211. In an embodiment, as the first electrode 211 of the electrode assembly 210 is illustrated as the positive electrode, the terminal 230 may function as the positive terminal of the battery cell 20.

For example, the terminal 230 may be connected to the first electrode 211 of the electrode assembly 210 by a first current collection member 231.

The first current collection member 231 may be arranged between the electrode assembly 210 and the terminal 230. The first current collection member 231 may electrically connect the electrode assembly 210 to the terminal 230.

The first current collection member 231 according to an embodiment may be arranged between a surface of the electrode assembly 210 from which the first uncoated portion 2111 protrudes and the other end of the terminal 230 in the inner space of the case 220. In an embodiment, the first current collection member 231 may be formed of a metallic material having electrical conductivity, such as aluminum, nickel, copper, etc.

The first current collection member 231 may have a generally disk shape. Opposite surfaces of the first current collection member 231 may contact the first uncoated portion 2111 and the terminal 230. The end of the first uncoated portion 2111 may be bent in a direction parallel to the first current collection member 231 and may be connected to a bottom surface of the first current collection member 231 by laser welding, ultrasonic welding, etc. A top surface of the first current collection member 231 may contact the bottom surface of the terminal 230 protruding toward an inner side of the can 221, and may be connected to the bottom surface of the first current collection member 231 by laser welding, ultrasonic welding, etc. Thus, the first current collection member 231 may provide an electrical connection between the electrode assembly 210 and the terminal 230.

The can 221 may be electrically connected to the second electrode 212 of the electrode assembly 210. According to an embodiment, the terminal plate 222 connected to the can 221 may function as a second electrode terminal. In an embodiment, as the first electrode 211 of the electrode assembly 210 is illustrated as the positive electrode, the terminal plate 222 provided in the can 221 may function as the negative terminal of the battery cell 20.

For example, the can 221 may be connected to the second electrode 212 of the electrode assembly 210 by a second current collection member 232.

The second current collection member 232 may be arranged between the electrode assembly 210 and the cap plate 224. The second current collection member 232 may electrically connect the electrode assembly 210 to the case 220. In an embodiment, the second current collection member 232 may be formed of a metallic material having electrical conductivity, such as aluminum, nickel, copper, etc.

The second current collection member 232 according to an embodiment may include a planar portion 2321 facing a surface of the electrode assembly 210 from which the second uncoated portion 2121 protrudes, and an extension portion 2322 extending from the planar portion 2321.

A top surface of the planar portion 2321 facing the surface of the electrode assembly 210 from which the second uncoated portion 2121 protrudes may be connected to the second uncoated portion 2121. The end of the second uncoated portion 2121 may be bent in a direction parallel to the planar portion 2321 and may be connected to a surface of the planar portion 2321 by welding, etc. The bending direction of the second uncoated portion 2121 may be toward the winding axis of the electrode assembly 210.

The extension portion 2322 may extend toward the cap plate 224 from the edge of the planar portion 2321. The extension portion 2322 may contact the inner surface of the beading portion 225. The extension portion 2322 may be rounded or bent along the beading portion 225. The extension portion 2322 may be connected to the beading portion 225 by welding, etc. Thus, in an embodiment, the case 220 and the second electrode 212 are electrically connected, and the terminal plate 222 may function as a negative terminal.

In an embodiment, the extension portion 2322 may be formed in plural. A plurality of extension portions 2322 may be arranged spaced apart from each other along the edge of the planar portion 2321.

The terminal 230 may penetrate the terminal plate 222 along the central axis C of the battery cell 20. The terminal gasket G2 may be arranged between the terminal 230 and the terminal plate 222.

In an embodiment, the central axis of the terminal plate 222 may be arranged coaxially with the central axis C of the battery cell 20.

The busbar assembly 400 may be arranged in the housing 10 to face the terminal plate 222 and/or the terminal 230.

The busbar assembly 400 may be electrically connected to the terminal plate 222 and/or the terminal 230. The busbar assembly 400 may electrically connect the terminal plates 222 and/or the terminals 230 of the plurality of battery cells 20, or provide an electrical connection between the terminal plates 222 and/or the terminals 230 and a control circuit of the battery pack 1 or external power equipment.

The busbar assembly 400 may be provided in plural. In an embodiment, each busbar assembly 400 may be individually connected to the terminal plate 222 and/or the terminal 230 of a different battery cell 20.

The busbar assembly 400 according to an embodiment may have a form of a plate including at least one conductive metal selected from aluminum, nickel, and copper. The busbar assembly 400 may be formed to have a planar shape, or may have a bent structure with one or more bending sections.

The busbar assembly 400 may contact the top surface of the terminal plate 222 and may be coupled to the top surface of the terminal plate 222 by welding, etc.

The busbar assembly 400 may contact the top surface of the terminal 230 and may be coupled to the top surface of the terminal 230 by welding, etc.

The busbar assembly 400 may connect the plurality of battery cells 20 in parallel, in series, or in a series-parallel manner.

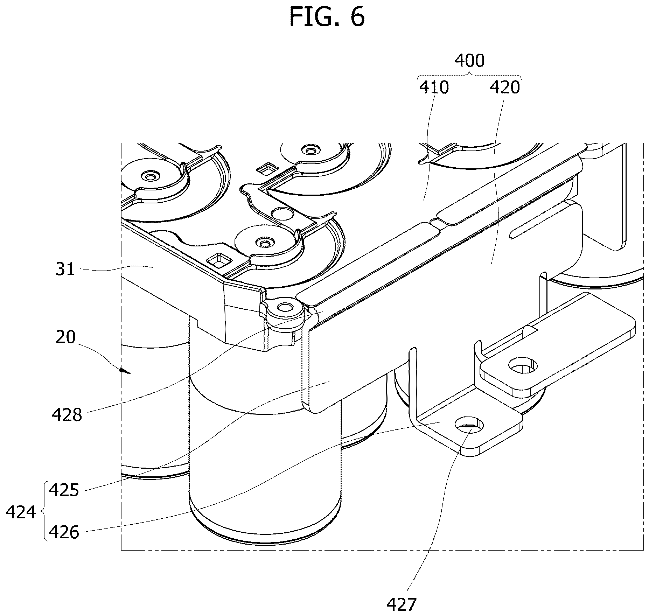

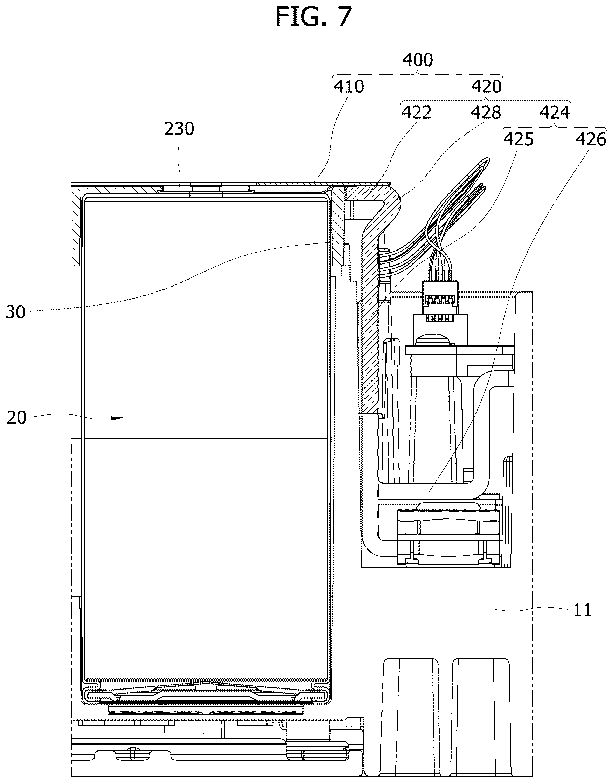

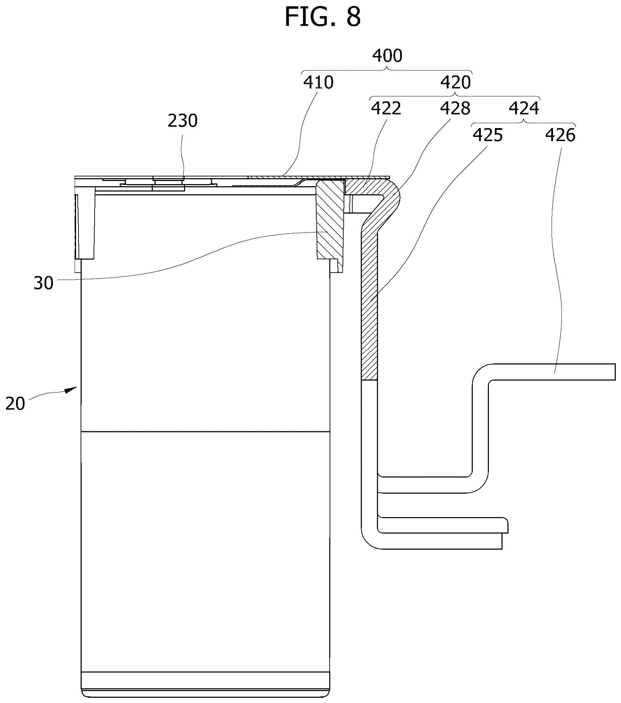

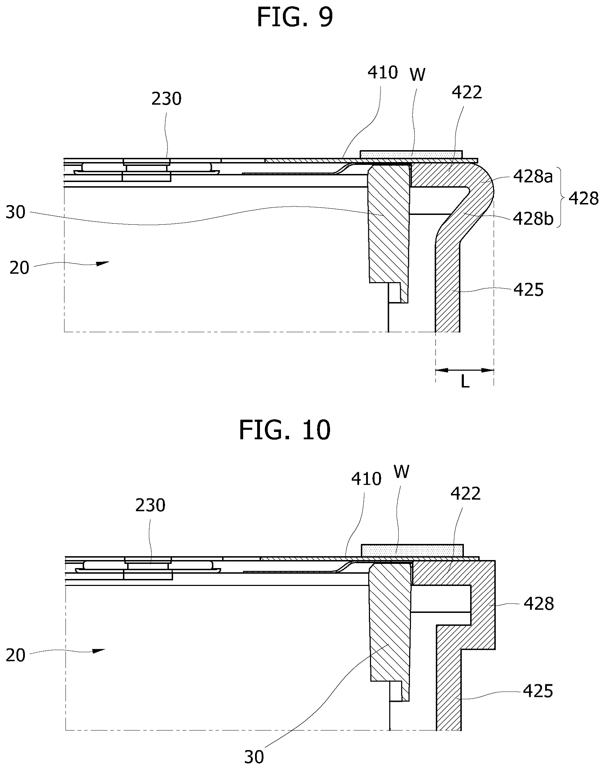

FIG. 6 is a perspective view schematically showing an installation state of a busbar assembly according to an embodiment of the present disclosure; FIG. 7 is a cross-sectional view schematically showing an installation state of a busbar assembly according to an embodiment of the present disclosure; FIG. 8 is a cross-sectional view schematically showing a shape of a second busbar according to an embodiment of the present disclosure; and FIG. 9 is an enlarged view of a main portion showing connection of the busbar assembly according to an embodiment of the present disclosure.

Referring to FIGS. 1 through 9, the busbar assembly 400 according to an embodiment may include the first busbar 410 that electrically connects the plurality of battery cells 20, and a second busbar 420 electrically connected to the first busbar 410 and connected to a protection device.

The first busbar 410 may be formed in a flat plate shape and arranged on the holder portion 30. The first busbar 410 may electrically connect the plurality of battery cells 20. The plurality of battery cells 20 may be connected in series or in parallel by the first busbar 410.

The second busbar 420 may include a welding portion 422 connected to the first busbar 410 and a binding portion 424 extending from the welding portion 422 and connected to the protection device.

The welding portion 422 may be formed with a width (e.g., a specific width) to contact a side of the first busbar 410, and the binding portion 424 may include a vertical portion 425 extending in a direction opposite to the third direction from the welding portion 422 and a connection portion 426 bent from the vertical portion 425 to extend in the direction opposite to the first direction and having a connection hole 427 formed therein so as to be coupled to the protection device.

The height of the welding portion 422 may be a height at which the welding portion 422 contacts the bottom surface of the first busbar 410. The height of the welding portion 422 may be determined by the length of the vertical portion 425.

The welding portion 422 may electrically connect to the first busbar 410. The welding portion 422 may be formed with a certain width (e.g., a specific width). As the welding portion 422 maintains a certain width, electrical connection reliability with the first busbar 410 may be provided.

To provide the electrical connection reliability between the first busbar 410 and the welding portion 422, the second busbar 420 may include a bending portion 428.

The bending portion 428 may be formed between the welding portion 422 and the vertical portion 425, and may extend in a direction opposite to the first direction to expand a welding region W (Fig. 9) of the welding portion 422 while maintaining a gap between the vertical portion 425 and the battery cell 20.

A front end of the welding portion 422 may be formed to extend in the first direction beyond the inner surface of the vertical portion 425. That is, as the front end of the welding portion 422 extends in the first direction, the welding region W of the welding portion 422 may expand, and the gap between the battery cell 20 and the vertical portion 425 may also be maintained.

The bending portion 428 may include a curve portion 428a bent downward from a rear end of the welding portion 422, and an inclined portion 428b inclined downward from the curve portion 428a to the vertical portion 425. The welding portion 422 may form an expanded region due to the bending portion 428, and may absorb vibrations and external impacts due to a shape thereof.

The curve portion 428a may be formed with a shape that protrudes further to a rear side than the thickness of the vertical portion 425, and the welding region W of the welding portion 422 may be formed at least larger than the thickness of the vertical portion 425 due to such a shape of the bending portion 428.

In an embodiment, a length L from the inner surface of the vertical portion 425 to the outer side of the bending portion 428 may be within (or up to) 20 mm. If the length of the welding portion 422 becomes unnecessarily long due to the bending portion 428, a unit cost may increase and resistance may rise.

A rear end of the curve portion 428a may be inside the connection hole 427. Therefore, assemblability in electrical connection between the connection portion 426 and the protection device may be improved, and a facility moving space, as the rear end of the curve portion 428a no longer interferes with a vertical line extending from the connection hole 427, may be provided.

FIG. 10 is a cross-sectional view schematically showing another example of a second busbar assembly according to an embodiment of the present disclosure.

Referring to FIG. 10, the second busbar 420 may include the welding portion 422 connected to the first busbar 410 and the binding portion 424 extending from the welding portion 422 and connected to the protection device. In an example of the second busbar 420, the shapes of the welding portion 422 and the binding portion 424 may be the same as those described above, and, therefore, further detailed description may be omitted.

For the modified example of the second busbar 420, the bending portion 428 may be formed with a "C"-shaped cross-section. That is, as an example of the second busbar 420 extends to the rear end of the welding portion 422, is bent downward, and then is bent in the first direction, thus forming the "C"-shaped cross-section, such that the welding region of the welding portion 422 expands, thereby providing electrical connection reliability between the first busbar 410 and the welding portion 422. In the illustrated example the bends are sharp, although, as in the previous embodiment, they may be more rounded.

However, in an embodiment, a shape of the bending portion 428 is not limited to the above description, and may be varied into various shapes.

Hereinbelow, the busbar assembly according to an embodiment of the present disclosure will be described.

The busbar assembly according to an embodiment may be configured to differ from the previously described embodiment only in a busbar assembly and a fixing portion provided additionally.

Thus, in describing the busbar assembly according to the present embodiment, only the busbar assembly and the fixing portion according to an embodiment of the present disclosure will be described.

For the rest of the busbar assembly according to the present embodiment, the description of the busbar assembly according to the previously described embodiment of the present disclosure may be applied.

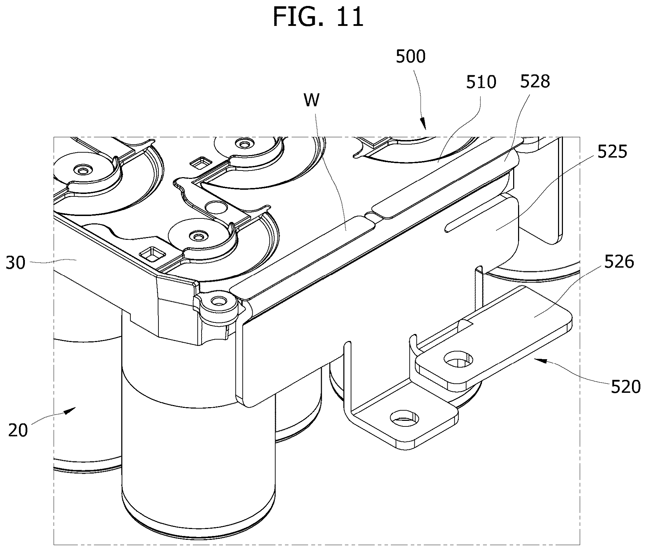

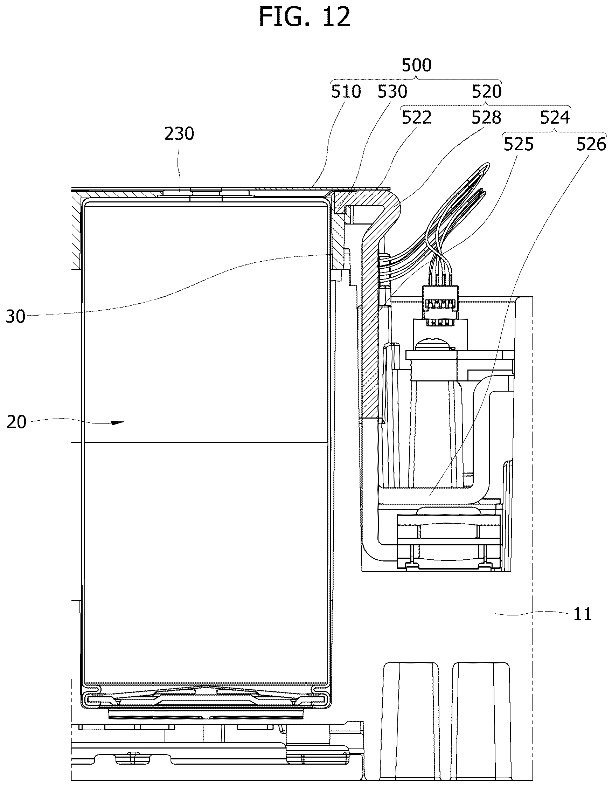

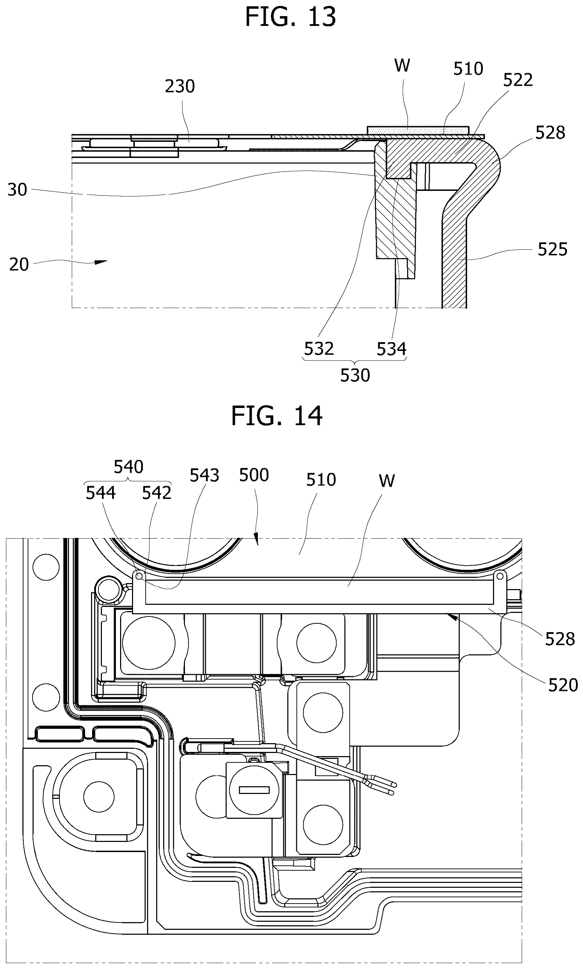

FIG. 11 is a perspective view schematically showing an installation state of a busbar assembly according to an embodiment of the present disclosure; FIG. 12 is a cross-sectional view schematically showing an installation state of the busbar assembly of FIG. 11; and FIG. 13 is an enlarged view schematically showing a main portion of fixing of the second busbar according to an embodiment of the present disclosure.

Referring to FIGS. 11 to 13, a busbar assembly 500 according to the present embodiment may include a first busbar 510 electrically connecting the plurality of battery cells 20 and a second busbar 520 electrically connected to the first busbar 510 and connected to the protection device, and the second busbar 520 may include a welding portion 522 connected to the first busbar 510 and a binding portion 524 extending from the welding portion 522 and connected to the protection device.

To provide electrical connection reliability between the first busbar 510 and the welding portion 522, the second busbar 520 may include a bending portion 528.

The welding portion 522 may further include a fixing portion 530 to provide assembly stability. An insulation member may be provided between the battery cell 20 and the vertical portion 525.

In the current embodiment, the insulation member may include the housing body 11 and the holder portion 30. That is, the insulation member may be capable of separating and insulating the battery cell 20 from the vertical portion 525 and may include the housing body 11 and the holder portion 30, and a separate insulation member capable of separating the battery cell 20 from the vertical portion 525 may be further provided.

For convenience of description, the insulation member will be designated as the holder portion and applied with the same numbering.

The fixing portion 530 may include a fixing protrusion 532 bent downward from the front end of the welding portion 522 and a fixing groove 534 formed in the holder portion 30 to allow the fixing protrusion 532 to be fitted thereinto.

The fixing protrusion 532 may be formed by bending the front end of the welding portion 522, or may be formed to be protruding from a bottom surface of the front end of the welding portion 522.

The fixing protrusion 532 may be formed along the length of the front end of the welding portion 522, or may be formed in plural so as to be spaced apart on the bottom surface of the front end of the welding portion 522.

The fixing groove 534 may accommodate and fix the fixing protrusion 532, and may be formed as a straight groove or a plurality of grooves spaced apart to correspond to the shape of the fixing protrusion 532.

Such a fixing portion 530 may prevent or substantially prevent angular distortion of the bending portion 528 after bending and secure assembly stability during welding between the welding portion 522 and the first busbar 510.

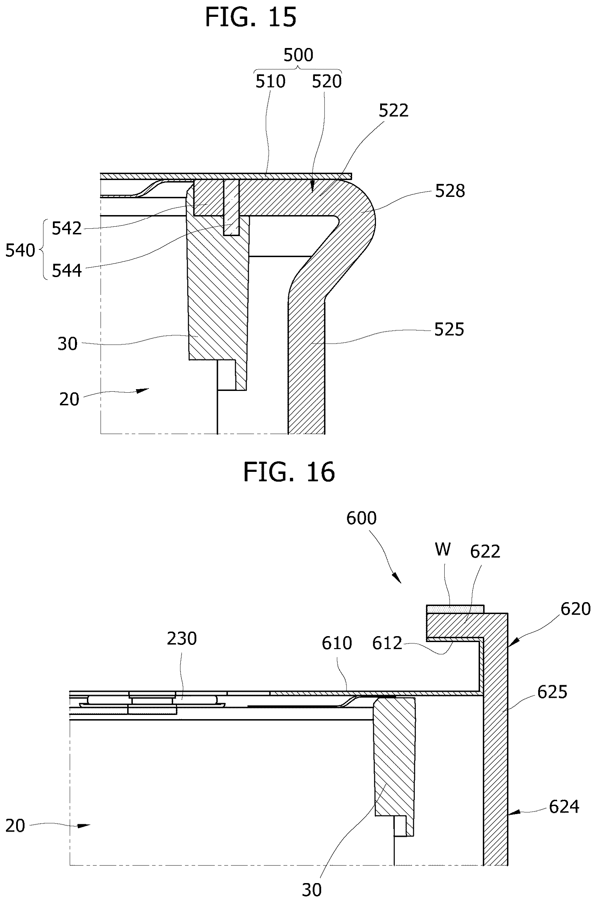

FIG. 14 is a perspective view showing another example of fixing of the second busbar according to an embodiment of the present disclosure; and FIG. 15 is a cross-sectional view showing an example of fixing of the second busbar according to an embodiment of the present disclosure.

Referring to FIGS. 14 and 15, a fixing portion 540 according to the present embodiment may be formed on the welding portion 522 and include a fixing piece 542 with a fixing hole 543 formed therein and a fixing member 544 bound to the holder portion 30 through the fixing hole 543.

The fixing piece 542 may be formed on an outer side of the welding region W between the welding portion 522 and the first busbar 510. That is, the fixing piece 542 may be formed to extend in the first direction from opposite edges of the welding portion 522.

Further, the fixing member 544 may include a fixing screw coupled to the holder portion 30 through the fixing hole 543. Although not shown, in an embodiment, the fixing member 544 may be integrally formed on the top surface of the holder portion 30 and may include a protruding projection.

Therefore, as the fixing hole 543 of the fixing piece 542 is fixed to the holder portion 30 via the fixing member 544, angular distortion after bending of the bending portion 528 may be prevented or substantially prevented, and assembly safety during welding may be provided.

Hereinbelow, the busbar assembly according to another embodiment of the present disclosure will be described.

The busbar assembly according to the present embodiment may be configured to differ only in contact structure between the first busbar and the second busbar of the busbar assembly according to the previously described embodiment of the present disclosure.

Thus, in describing the busbar assembly according to the present embodiment, only a contact structure between the busbar assembly according to the previously described embodiment of the present disclosure and the first and second busbars will be described.

For the rest of the busbar assembly according to the present embodiment, the description of the busbar assembly according to the previously described embodiment of the present disclosure may be applied.

FIG. 16 is a cross-sectional view schematically showing an installation state of a busbar assembly according to another embodiment of the present disclosure.

Referring to FIG. 16, a busbar assembly 600 according to another embodiment of the present disclosure may include a first busbar 610 electrically connecting the plurality of battery cells 20 and a second busbar 620 electrically connected to the first busbar 610 and connected to the protection device, and the second busbar 620 may include a welding portion 622 connected to the first busbar 610 and a binding portion 624 extending from the welding portion 622 and connected to the protection device.

The welding portion 622 may be formed with certain width (e.g., a specific width) to contact a side of the first busbar 610, and the binding portion 624 may include a vertical portion 625 extending in the direction opposite to the third direction from the welding portion 622 and a connection portion (not shown, but, for example, similar to the previous embodiments) having a connection hole formed therein so as to be coupled to the protection device.

In an embodiment, the welding portion 622 may be formed higher than the height of the battery cell 20. Further, the first busbar 610 may include a contact portion 612 that contacts (e.g., closely contacts) the welding portion 622 and the vertical portion 625.

The height of the welding portion 622 may be determined by the length of the vertical portion 625. The welding portion 622 may extend horizontally in the first direction from an upper end of the vertical portion 625, such that the welding portion 622 and the vertical portion 625 may form an "L"-shaped cross-section. The contact portion 612 of the first busbar 610 may contact (e.g., closely contact) and thus may be electrically connected to the welding portion 622 and the vertical portion 625.

The contact portion 612 may be bent from the first busbar 610 and contact a plurality of surfaces of the second busbar 620. The contact portion 612 may be bent upward from the first busbar 610 and then may be bent in the first direction, thus contacting the bottom surface of the welding portion 622 and the inner surface of the vertical portion 625.

That is, as shown in FIG. 16, the contact portion 612 may be formed with a 'C'-shaped cross-section such that a wider surface may contact the second busbar 620. By welding the top surface of the welding portion in this contact state, electrical connection may be made. In the illustrated example the bends are sharp, although they may be more rounded.

As a result, contact may be made on a wider surface, thus improving bonding reliability.

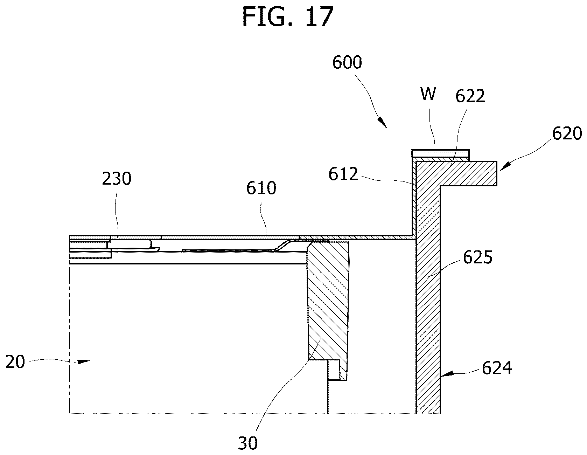

FIG. 17 is a cross-sectional view schematically showing another example of a busbar assembly according to an embodiment of the present disclosure.

Referring to FIG. 17, the welding portion 622 may extend in the direction opposite to the first direction from the vertical portion 625, and the contact portion 612 may be bent upward from the first busbar 610 and then bent in the direction opposite to the first direction, thus contacting the top surface of the welding portion 622 and the inner surface of the vertical portion 625.

The contact portion 612 may be formed with an ""L"-shaped cross-section, such that the horizontal section may contact the top surface of the welding portion 622, and the vertical section may contact the vertical portion 625. In this contact state, the top surface of the contact portion 612 may be welded to the welding portion 622, thus achieving electrical connection. In the illustrated example the bends are sharp, although they may be more rounded.

According to embodiments of the present disclosure, the welding region of the busbar assembly may be formed large, thereby preventing or substantially preventing welding defects during bonding and improving assemblability.

In particular, by forming the bending portion on the second busbar electrically connected to the protection device according to embodiments of the present disclosure, a wide welding region may be formed, and the shape of the bending portion may absorb extemal impacts, thereby enhancing reliability.

According to embodiments of the present disclosure, a structure (e.g., an optimized structure) of the busbar assembly may improve electrical connection reliability and minimize or reduce the weight and internal volume of the battery pack while improving assemblability. For example, by forming the separate but continuous welding and binding portions on the second busbar it becomes easier to electrically connect between the first busbar and the protection device as a wide welding region may be formed, and the shape of the binding portion may absorb extemal impacts, thereby enhancing reliability and improving assemblability to the protection device.

However, aspects and effects obtainable through the present disclosure are not limited to the above aspects and effects, and other aspects and technical effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A busbar assembly comprising:
a first busbar electrically connecting a plurality of battery cells; and
a second busbar electrically connected to the first busbar and connected to a protection device,
wherein the second busbar comprises:
a welding portion connected to the first busbar; and
a binding portion extending from the welding portion and connected to the protection device.

2. The busbar assembly as claimed in claim 1, wherein the first busbar has a flat plate shape, and
a height of the welding portion is a height at which the welding portion contacts a bottom surface of the first busbar.

3. The busbar assembly as claimed in claim 1 or claim 2, wherein the binding portion comprises:
a vertical portion extending from the welding portion in a direction opposite to a third direction; and
a connection portion bent from the vertical portion, extending in a direction opposite to the first direction, and having a connection hole therein so as to be coupled to the protection device.

4. The busbar assembly as claimed in claim 3, wherein the second busbar further comprises a bending portion extending in the direction opposite to the first direction and bent between the welding portion and the vertical portion such that a welding region of the welding portion expands while maintaining a gap between the vertical portion and a battery cell of the plurality of battery cells.

5. The busbar assembly as claimed in claim 4, wherein a front end of the welding portion extends in the first direction beyond an inner surface of the vertical portion.

6. The busbar assembly as claimed in claim 4 or claim 5, wherein the bending portion comprises:
a curve portion bent downward from a rear end of the welding portion; and
an inclined portion inclined downward from the curve portion to the vertical portion.

7. The busbar assembly as claimed in claim 6, wherein a rear end of the curve portion is arranged inside the connection hole.

8. The busbar assembly as claimed in any one of claims 4 to 7, wherein the bending portion has a "C"-shaped cross-section.

9. The busbar assembly as claimed in any one of claims 4 to 8, wherein the welding portion comprises a fixing portion to provide assembly stability.

10. The busbar assembly as claimed in claim 9, further comprising an insulation member between the battery cell and the vertical portion, and
the fixing portion comprises:
a fixing projection bent downward from the front end of the welding portion; and
a fixing groove formed in the insulation member to allow the fixing projection to be fitted therein.

11. The busbar assembly as claimed in claim 9 or claim 10, further comprising an insulation member between the battery cell and the vertical portion, and
the fixing portion comprises:
a fixing piece arranged in the welding portion and having a fixing hole therein; and
a fixing member bound to the insulation member through the fixing hole.

12. The busbar assembly as claimed in claim **11,** wherein the fixing piece is located outside the welding portion and the welding region of the first busbar.

13. The busbar assembly as claimed in any one of claims 3 to 12, wherein the welding portion is located higher than a height of a battery cell of the plurality of battery cells, and
the first busbar comprises a contact portion contacting the welding portion and the vertical portion.

14. The busbar assembly as claimed in claim 13, wherein the contact portion is bent from the first busbar and contacts a plurality of surfaces of the second busbar, and optionally wherein the contact portion is bent upward from the first busbar and is bent in the first direction to contact a bottom surface of the welding portion and the vertical portion.

15. A battery pack comprising:
a housing;
a plurality of battery cells accommodated in the housing; and
a busbar assembly connecting the plurality of battery cells,
wherein the busbar assembly is as claimed in any one of the preceding claims.
